# EUROPEAN PATENT SPECIFICATION

(11) **EP 0 873 688 B1**
(45) Date of publication and mention of the grant of the patent: **19.11.2003**
(21) Application number: 98200430.1
(22) Date of filing: 11.02.1998
(51) Int. Cl.: A21D 10/00, A21D 10/04

(54) **Pourable premix for bakery applications**
Fliessfähige Vormischung für Bäckerei
Prémélange pour être utilisé en boulangerie à écoulement facile

(30) Priority: 03.03.1997 DK 23297; 17.03.1997 EP 97200798; 26.03.1997 EP 97200909
(43) Date of publication of application: 28.10.1998
(73) Proprietor: CSM Nederland B.V., 1112 XE Diemen (NL)
(72) Inventor: Albisu, Itziar, Stabilimento di Crema (Cremona) (IT); Di Gioia, Maria Teresa, Stabilimento di Crema (Cremona) (IT)
(74) Representative: van Westenbrugge, Andries

(56) References cited:
- EP-A- 0 145 550
- EP-A- 0 156 573
- US-A- 3 268 337
- US-A- 3 975 550
- US-A- 4 022 917
- US-A- 5 409 720

## Description

All known cake mixes that are in the market now are based on powdered mixtures, wherein dry ingredients only are present. These mixtures have a number of draw backs, such as the fact that these mixtures require a long preparation time, while also a number of fresh ingredients such as eggs, milk and/or butter and/or margarine need to be incorporated before they can be applied prior to baking of the end product. Therefore these known mixes do not fulfil the requirements for a convenience mix that consumers demand nowadays.

Therefore we studied whether we could develop a totally new concept for a composition that could be applied on a commercial scale for the preparation of bakery products, such as the preparation of cake batters e.g. for Margherita cake, cocoa cake, flavoured cakes with particular components such as nuts or fruit etc. This new composition should be pourable and have a shelf life of a number of weeks, simultaneously this new composition should contain a leavener system, that would survive the storage time in a wet medium, while upon use it still would be able to provide sufficient volume to the bakery product upon baking.
The mixture according to the invention should be pourable and should therefore not contain the flour component of the batter.
The flour will be added to the mixture prior to its use. The fact that the premix according to the invention is pourable will increase its convenience because the mix will be easier to handle than any powdered mix known so far.

Another advantage obtained by our new mixes is that the preparation times will be very short for the user, because all the user needs to do is to mix our mix with the correct amount of flour (and eventually: starch).

Therefore our invention concerns a pourable storage stable premix for bakery applications that does not contain flour, comprising: 20-60 wt of carbohydrates, preferably sugars
5-35 wt % of pasteurised or sterilised whole egg
4-40 wt% of fat or oil
1-10 wt% of a waterbinder, preferably mono-or poly-alcohols, more preferably alcohol or glycerol
1-5 wt% of a gas generating system with deferred gas generating properties
0.1-10 wt% water,
which premix displays a water activity Aw=0.7-0.92.

The sugars herein are used for flavour purposes and to decrease the Aw value of the total mix. Preferred amounts are 25-50 wt % and in particular 30-45 wt%.
The whole egg component needs to be pasteurised or sterilised in order to obtain the required shelf life. The egg component provides structure, colour and flavour to the end product. Preferred amounts are 10-30 wt %, most preferably 15-25 wt %.
The fat component provides softness and structure to the end product. Preferred amounts of fat are 6-35, most preferably 10-25 wt %. The fat component can be added as fat or oil per se or as an emulsion in water, e.g in the form of margarine.
The waterbinder is added as a component that regulates the Aw value of the mixture. Moreover some of the waterbinders that we can apply, such as alcohol also act as preservative. The amounts of waterbinder is preferably 1.5-4, more preferably 2-3,5 wt %.

An important component for obtaining good product properties, such as specific volume is the gas generating system. This system normally will consist of two components that can react with each other, if in contact with a system that contains water, such as a dough or batter. In order to avoid a reaction between the two components it is useful to embed the two components in an inert third component. In this way it is possible that the gas generating system with deferred gas generating properties is a system that displays after storage for 6 months at ambient temperature at least 50 %, preferably at least 80% of the theoretical gas generating properties of the freshly made gas generating system.
Very useful systems are obtained if it comprises an acidic component and a basic component that are separated by the inert component.
The acidic component can be selected from the group consisting of: salts of pyrophosphate, citric acid, tartaric acid, salts of citric acid, salts of tartaric acid, diphosphates, glucon delta lacton and aluminium phosphates, while the basic component is selected from the group consisting of hydrogen carbonates and carbonates.

Suitable inert components are fatty components with a melting point above the temperature applied during the process of preparation of the total mix and below the temperature applied to the premix in the final baking stage. Preferred fatty components are selected from the group consisting of mono-, di-and triglycerides. More preferably the fatty components are saturated monoglycerides from fatty acids.

A most preferred gas generating system with deferred gas generating properties is a spray cooled mix as disclosed in WO 98/38869. This system is preferably applied in amounts of 3-6 wt%. The gas generating system according to this Danish patent application can comprise an acidic component (A), a basic component (B) and at least one inert component (C). The acidic component (A) can be encapsulated in the inert component (C), but it also possible to encapsulate the basic component (B) in this inert component (C). In a preferred embodiment both components (A) and (B) are encapsulated in an inert material (C). It is in this instance also possible to encapsulate materials (A) and (B) in two different inert materials (C1) and (C2).
According to another embodiment of the invention it is also possible to encapsulate (A) and/or (B) with material (C) to mix the encapsulated (A) and/or (B) with the other ingredient (A) or (B) either encapsulated or not and to encapsulate the mix so obtained with further encapsulating inert material (C), which can be the same or different as the material used for the encapsulation of (A) and/or (B). Suitable examples af encapsulating materials (C) are water soluble compounds such as carbohydrate hydrocolloids (cellulose, amylose, pectin, carrageenan, alginate, agar, dextrane, locust bean gum, guar gum, amylopectin, gum arabic, CMC, modified starch etc) and gelatin. Most suitable however are fatty substances such as mono-, di- or triglycerides but also polyglycerols or waxes could be applied.
In a preferred embodiment of the invention these components are used in a a beta crystal form. This crystal form can be obtained by making the encapsulated products in a state wherein the encapsulating material is liquid and then subjecting the encapsulated product to conditions wherein the fatty component is solidified and transformed into the beta crystal form.
These fatty materials can have melting points of 20-100 oC, preferably 40-80 and most preferable 50-70 oC.
The encapsulating material can also be made of a compound that degrades under the influence of enzymes, in particylar enzymes that are present in the pourable premix or that can be added to it.
The thickness of the encapsulating material is in general such that the encapsulating material represents more than 25 wt% of the encapsulated product. The encapsulated products are in general solids with an avarage particle size of 50-1000 microns. The encapsulated product is suitably made by admixing the acidic and/or basic components with the encapsulating material in liquid or dissolved state followed by subjecting the mixture to process steps that result in a solidification of the liquid encapsulating material. Processes that can be applied are spray drying, spray cooling or chemical treatment whereby the encapsulating component becomes a coherent solid layer around the acidic and/or basic component. In a preferred procedure the acidic and the basic components are encapsulated separately with a saturated monoglyceride, whereupon the two encapsulated products are mixed under stirring so that the fat phase is still melted. Subsequently the mix obtained is spray cooled and the monoglyceride is permited to go over into the beta crystal form.

This system in particular comprises 40-60 wt% saturated monoglycerides; 10-30 wt% NaHCO₃ and 20-40 % disodium-pyrophosphate.

Our premix also contains some water, preferred amounts of water being 0.1-8 wt % and more preferably 2-6 wt %. The amount of water indicated represents the total amount of water present but not including the water in the egg component, so it includes the free water and the water that is part of the other ingredients other than the egg-components.
The wateractivity of our premix is preferably adjusted to 0.75-0.85.

In our premixes a number of optional components can be present as well. Therefore our pourable premix can also contain one or more of the following components in the amounts indicated:
up to 20 wt% of egg yolk or egg yolk powder or fermented egg yolk
up to 10 wt% emulsifier
up to 5 wt% preservatives
up to 1 wt% salt
up to 0.5 wt% flavours
up to 20 wt% cocoa or cocoa powder
up to 50 wt% of nuts
up to 30 wt% chocolate
up to 50 wt% fruit pieces or fruit skin
up to 30 wt% fruit puree.
up to 30 wt% yoghurt
up to 30 wt% dairy or non-dairy cream
up to 20 wt% milk
up to 10 wt% liquid coffee
up to 10 wt% coffee granules
up to 5 wt% spirit
up to 15 wt% honey
up to 10 wt% spices

The egg yolk improves the cake development and is preferably present in amounts of 5-15 wt %.

The emulsifier can be any food grade emulsifier, however a mixture of mono and diglycerides performs very well. Other advantageous emulsifiers are data esters. Preferred amounts of emulsifier are 1-7 wt %.

The preservatives are the common food grade preservatives. Sorbates however are preferred, in particular in amounts of 0.5-3 wt %.

Although salt could be absent an amount of 0.1-0.8 wt % is preferred.

Flavours can be added in amounts of preferably 0.05-0.3 wt %. All food grade flavours can be used, but a preference exists for the use of fruit flavours.

Cocoa or cocoa powder can be added in preferred amounts of 2-15 wt %.

Nuts can be applied in order to provide a nutty taste to the products. Preferred amounts being 10-40 wt %. Fruit pieces or fruit skins can also be added, preferably in amounts of 10-40 wt %. However it also possible to use fruit puree in stead, preferably in amounts of 5-25 wt %. Yoghurt or dairy or non-dairy cream can also be added. Preferred amounts being 5-25 wt %. The preferred amount of milk that is applied ranges from 3-15 wt %. In stead of milk also coffee milk can be used. The preferred amounts being then 2-8 wt %. Liquid coffee or coffee granulates can be incorporated in preferred amounts of 2-8 wt %. In order to increase taste it is possible to incorporate spirit (preferably 1-4 wt %), honey (preferably 2-12 wt %) or spices (preferably 2-8 wt %) in the products according to the invention.

Part of the invention also is a bakery batter comprising 40-80, preferably 50-70 wt % of the premix according to the invention and 20-60, preferably 30-50 wt % of flour. Also cakes obtained after baking of an amount of batter, preferably after filling a mould with our batter are part of our invention.

According to a last embodiment of our invention our invention also concerns a process for the preparation of a pourable premix for bakery application with the composition according to claim 1, wherein a mix is made of all ingredients in the appropriate amounts at a temperature below 45 oC, whereupon the mix is passed through a Votator comprising several, in particular 1-4 cooling units and the premix formed is packed at a temperature below 20 oC.

### EXAMPLES

I. A blend with the following composition was made:

| component | wt% |
|---|---|
| blend Gradina® | 13.3 |
| flavour | 0.05 |
| whole egg | 22.9 |
| egg yolk | 9.8 |
| sugar | 41.7 |
| gas generating system* | 5.0 |
| ethanol | 3.0 |
| emulsifier | 1.0 |
| water | 3.0 |

| | |
|---|---|
| * comprising 25% NaHCO3 in sat. MG and 30% disodiumpyrophosphate in sat. MG, encapsulated together in sat. MG with M. pt. 65 oC. | |

In a cooled tank at about 10 oC the egg components were mixed. In another tank at 30 oC the fat (=Blend Gradina) were mixed with the flavour components ,the water, the sugar, the emulsifier and the gas generating system. The egg mixture was introduced in the fat mixture and the mixture obtained was recirculated. The alcohol was added to the recirculated mixture and the premix so obtained was pumped at 30 oC into a feeding tank for a Votator processing unit.
The mixture was passed through 3 A-Cooling Units while being stirred and the mixture left the last cooling unit at a temperature of 5-15oC. The mixture was led to a packaging equipment with a throughput of 2500 - 4000 kg/h and tubs of 500g were filled with the end composition.
II. 500 g of above pourable premix were mixed with 250 g of flour and the batter so obtained was transferred to a mould and baked for 40 min at 180 oC in an electric oven.
III. In a similar process as disclosed in example I a premix was made for a chocolate cake batter. The recipe in this case was:

| component | wt % |
|---|---|
| blend Gradina(=fat emulsion) | 12.7 |
| flavours | 0.04 |
| whole egg | 21.5 |
| egg yolk | 9.3 |
| sugar | 39.2 |
| gas generating system | 5.0 |
| ethanol | 3.3 |
| water | 3.0 |
| emulsifier | 1.0 |
| cocoa powder | 5.0 |

IV. 500 g of the pourable mix of example III were mixed with 230 g of flour and the batter so obtained was transferred to a mould and baked at 185 oC for 45 min.

## Claims

1. Pourable storage stable premix for bakery applications that does not contain flour, comprising:
20-60 wt% of carbohydrates, preferably sugars
5-35 wt% of pasteurised or sterilised whole egg
4-40 wt% of fat
1-5 wt% of a waterbinder, preferably mono-or poly-alcohols, more preferably alcohol or glycerol
1-10 wt% of a gas generating system with deferred gas generating properties
0.1-10 wt% water, which premix displays a water activity Aw = 0.7-0.92.

2. Premix according to claim 1, wherein the premix also comprises at least one of the following compounds in the amount indicated:
up to 20 wt% of egg yolk or egg yolk powder or fermented egg yolk
up to 10 wt% emulsifier
up to 5 wt% preservatives
up to 1 wt% salt
up to 0.5 wt% flavours
up to 20 wt% cocoa or cocoa powder
up to 50 wt% of nuts
up to 30 wt% chocolate
up to 50 wt% fruit pieces or fruit skin
up to 30 wt% fruit puree.
up to 30 wt% yoghurt
up to 30 wt% dairy or non-dairy cream
up to 20 wt% milk
up to 10 wt% liquid coffee
up to 10 wt% coffee granules
up to 5 wt% spirit
up to 15 wt% honey
up to 10 wt% spices

3. Premix according to claims 1-2, wherein the fat and water are present as an emulsion, preferably as a margarine.

4. Premix according to claims 1-3, wherein the gas generating system with deferred gas generating properties is a system that displays after storage for 6 months at ambient temperature at least 50 %, preferably at least 80% of the theoretical gas generating properties of the freshly made gas generating system.

5. Premix according to claims 1-4, wherein the gas generating system with deferred gas generating properties comprises an acidic component and a basic component that are separated from each other by an inert component.

6. Premix according to claim 5, wherein the acidic component is selected from the group consisting of: salts of pyrophosphate, citric acid, tartaric acid, salts of citric acid, salts of tartaric acid, diphosphates, glucon delta lacton and aluminium phosphates, while the basic component is selected from the group consisting of hydrogen carbonates and carbonates.

7. Premix according to claims 5-6, wherein the inert component is a fatty component with a melting point below the temperature applied to the premix in the final baking stage, and above the temperature used in the process, of preparation of the total mix.

8. Premix according to claims 5-7, wherein the inert component is selected from the group consisting of mono-, di-and triglycerides, preferably saturated monoglycerides from fatty acids.

9. Premix according to claims 5-8, wherein the gas generating system with deferred gas generating properties is a spray cooled mix.

10. Process for the preparation of a pourable storage stable premix for bakery application with the composition according to claim 1, wherein a mix is made of all ingredients in the appropriate amounts at a temperature below 45 °C, whereupon the mix is passed through a Votator comprising several, preferably 1-4 cooling units and the premix formed is packed at a temperature below 20 °C.

## Patentansprüche

1. Gießfähige lagerstabile Vormischung für Backanwendungen, die kein Mehl enthält, umfassend:
20-60 Gew.-% Kohlenhydrate, vorzugsweise Zucker;
5-35 Gew.-% pasteurisiertes oder sterilisiertes Vollei;
4-40 Gew.-% Fett;
1-5 Gew.-% eines Wasserbindemittels, vorzugsweise Mono- oder Polyalkohole, besonders bevorzugt Alkohol oder Glycerin;
1-10 Gew.-% eines Gaserzeugungssystems mit verzögerter Gaserzeugung;
0,1-10 Gew.-% Wasser, wobei die Vormischung eine Wasseraktivität Aw = 0,7-0,92 aufweist.

2. Vormischung gemäß Anspruch 1, wobei die Vormischung außerdem wenigstens eine der folgenden Verbindungen in der angegebenen Menge umfasst:
bis zu 20 Gew.-% Eidotter oder Eidotterpulver oder fermentierter Eidotter;
bis zu 10 Gew.-% Emulgator;
bis zu 5 Gew.-% Konservierungsstoffe;
bis zu 1 Gew.-% Salz;
bis zu 0,5 Gew.-% Aromen;
bis zu 20 Gew.-% Kakao oder Kakaopulver;
bis zu 50 Gew.-% Nüsse;
bis zu 30 Gew.-% Schokolade;
bis zu 50 Gew.-% Fruchtstücke oder Fruchthaut;
bis zu 30 Gew.-% Fruchtpüree;
bis zu 30 Gew.-% Joghurt;
bis zu 30 Gew.-% Rahm oder Rahmersatz;
bis zu 20 Gew.-% Milch;
bis zu 10 Gew.-% flüssigen Kaffee;
bis zu 10 Gew.-% Kaffeekörner;
bis zu 5 Gew.-% Alkohol;
bis zu 15 Gew.-% Honig;
bis zu 10 Gew.-% Gewürze.

3. Vormischung gemäß den Ansprüchen 1-2, wobei das Fett und das Wasser als Emulsion, vorzugsweise als Margarine, vorhanden sind.

4. Vormischung gemäß den Ansprüchen 1-3, wobei das Gaserzeugungssystems mit der verzögerten Gaserzeugung ein System ist, das nach 6 Monaten Lagerung bei Raumtemperatur wenigstens 50%, vorzugsweise wenigstens 80%, der theoretischen Gaserzeugungseigenschaften des frisch hergestellten Gaserzeugungssystems aufweist.

5. Vormischung gemäß den Ansprüchen 1-4, wobei das Gaserzeugungssystem mit der verzögerten Gaserzeugung eine saure Komponente und eine basische Komponente, die durch eine inerte Komponente voneinander getrennt sind, umfasst.

6. Vormischung gemäß Anspruch 5, wobei die saure Komponente aus der Gruppe ausgewählt ist, die aus Salzen von Pyrophosphorsäure, Zitronensäure, Weinsäure, Salzen von Zitronensäure, Salzen von Weinsäure, Diphosphaten, Glucon-δ-lacton und Aluminiumphosphaten besteht, während die basische Komponente aus der Gruppe ausgewählt ist, die aus Hydrogencarbonaten und Carbonaten besteht.

7. Vormischung gemäß den Ansprüchen 5-6, wobei die inerte Komponente eine Fettkomponente mit einem Schmelzpunkt unterhalb der Temperatur, die im letzten Backstadium auf die Vormischung angewendet wird, und oberhalb der Temperatur, die bei dem Verfahren zur Herstellung der Gesamtmischung verwendet wird, ist.

8. Vormischung gemäß den Ansprüchen 5-7, wobei die inerte Komponente aus der Gruppe ausgewählt ist, die aus Mono-, Di- und Triglyceriden, vorzugsweise gesättigten Monoglyceriden von Fettsäuren, besteht.

9. Vormischung gemäß den Ansprüchen 5-8, wobei das Gaserzeugungssystems mit der verzögerten Gaserzeugung eine sprühgekühlte Mischung ist.

10. Verfahren zur Herstellung einer gießfähigen lagerstabilen Vormischung für Backanwendungen mit der Zusammensetzung gemäß Anspruch 1, wobei aus allen Bestandteilen in den geeigneten Mengen bei einer Temperatur von unter 45 °C eine Mischung hergestellt wird, woraufhin die Mischung durch einen Votator, der mehrere, vorzugsweise 1-4, Kühleinheiten umfasst, geführt wird und die gebildete Vormischung bei einer Temperatur von unter 20 °C gepackt wird.

## Revendications

1. Prémélange apte à l'écoulement et stable au stockage pour applications boulangères qui ne contient pas de farine, comprenant :
de 20 à 60% en poids d'hydrates de carbone, de préférence des sucres,
de 5 à 35% en poids d'oeuf entier pasteurisé ou stérilisé,
de 4 à 40% en poids de matière grasse,
de 1 à 5% en poids d'un agent liant l'eau, de préférence des mono- ou polyalcools, de façon plus préférentielle un alcool ou le glycérol,
de 1 à 10% en poids d'un système générateur de gaz ayant des propriétés de génération de gaz différée,
de 0,1 à 10% en poids d'eau, ledit prémélange présentant une activité de l'eau A_{W} de 0,7 à 0,92.

2. Prémélange selon la revendication 1, dans lequel le prémélange contient également l'un au moins des composés suivants, dans la quantité indiquée :
jusqu'à 20% en poids de jaune d'oeuf ou de poudre de jaune d'oeuf ou de jaune d'oeuf fermenté,
jusqu'à 10% en poids d'émulsifiant,
jusqu'à 5% en poids de conservateurs,
jusqu'à 1% de sel,
jusqu'à 0,5% en poids d'arômes,
jusqu'à 20% en poids de cacao ou de beurre de cacao,
jusqu'à 50% en poids de noix,
jusqu'à 30% en poids de chocolat,
jusqu'à 50% en poids de morceaux de fruits ou de peau de fruits,
jusqu'à 30% en poids de purée de fruit,
jusqu'à 30% en poids de yaourt,
jusqu'à 30% en poids de crème laitière ou non laitière,
jusqu'à 20% en poids de lait,
jusqu'à 10% en poids de café liquide,
jusqu'à 10% en poids de granulés de café,
jusqu'à 5% en poids de spiritueux,
jusqu'à 15% en poids de miel,
jusqu'à 10% en poids d'épices.

3. Prémélange selon les revendications 1 à 2, dans lequel la matière grasse et l'eau sont présentes sous la forme d'une émulsion, de préférence sous la forme d'une margarine.

4. Prémélange selon les revendications 1 à 3, dans lequel le système générateur de gaz ayant des propriétés de génération de gaz différée est un système qui présente après stockage pendant 6 mois à la température ambiante au moins 50%, de préférence au moins 80% des propriétés théoriques de génération de gaz du système générateur de gaz fraîchement préparé.

5. Prémélange selon les revendications 1 à 4, dans lequel le système générateur de gaz ayant des propriétés de génération de gaz différée comprend un composant acide et un composant basique qui sont séparés l'un de l'autre par un composant inerte.

6. Prémélange selon la revendication 5, dans lequel le composant acide est choisi dans le groupe constitué par des sels de pyrophosphate, l'acide citrique, l'acide tartrique, des sels de l'acide citrique, des sels de l'acide tartrique, des diphosphates, la glucono-δ-lactone et des phosphates d'aluminium, tandis que le composant basique est choisi dans le groupe constitué par des hydrogénocarbonates et des carbonates.

7. Prémélange selon la revendication 5 à 6, dans lequel le composant inerte est un composant gras ayant un point de fusion inférieur à la température appliquée au prémélange dans l'étape de cuisson finale et supérieur à la température, mise en oeuvre dans le procédé, de préparation du mélange total.

8. Prémélange selon les revendications 5 à 7, dans lequel le composant inerte est choisi dans le groupe constitué par des mono-, di- et triglycérides, de préférence des monoglycérides saturés provenant d'acides gras.

9. Prémélange selon les revendications 5 à 8, dans lequel le système générateur de gaz ayant des propriétés de génération de gaz différée est un mélange refroidi par pulvérisation.

10. Procédé de préparation d'un prémélange apte à l'écoulement et stable au stockage pour applications boulangères ayant la composition selon la revendication 1, dans lequel on prépare un mélange de tous les ingrédients dans des quantités appropriées à une température inférieure à 45°C, puis on passe le mélange dans un Votator comprenant plusieurs, de préférence 1 à 4 unités de refroidissement et on conditionne le prémélange formé à une température inférieure à 20°C.
